# EUROPEAN PATENT SPECIFICATION

(11) **EP 2 058 481 B1**
(45) Date of publication and mention of the grant of the patent: **06.10.2010**
(21) Application number: 09154086.4
(22) Date of filing: 12.07.2006
(51) Int. Cl.: F01N 3/20

(54) **Fluid dosing device**
Fluiddosiervorrichtung
Dispositif de dosage de fluide

(43) Date of publication of application: 13.05.2009
(62) Divisional of application: 06253635.4
(73) Proprietor: Delphi Technologies Holding S.à.r.l., 4940 Bascharage (LU)
(72) Inventor: Cooke, Michael, Gillingham, Kent ME7 1DR (GB)
(74) Representative: Gregory, John David Charles

(56) References cited:
- EP-A- 1 712 755
- WO-A-2007/091969

## Description

### Technical Field

This invention relates to a device for dosing a gas flow with a fluid. In particular, the invention relates to a device for achieving optimum dispersion and mixing of a reagent in a flow of exhaust gases in order to reduce harmful exhaust gas emissions.

### Background of the Invention

The emission of nitrogen oxide (NOₓ) compounds in engine exhausts has long been the focus for health professionals and regulatory agencies worldwide. In many locations, regulations require stringent reductions of NOₓ levels in new equipments. NOₓ emissions may be found in a variety of systems such as internal combustion engines, gas turbine exhaust, lean burn engines, industrial boilers, process heaters or other process streams.

In order to reduce NOₓ emissions, it is known to use a Selective Catalyic Reduction (SCR) device to treat an exhaust flow and to significantly reduce nitrous oxide (NOₓ) emissions. In an SCR system a reducing agent, for example urea solution, is dosed into the exhaust gas flow upstream of an SCR catalyst. This reducing agent is then usually reacted in the presence of a catalyst downstream of the injection point in an SCR device. Within the SCR device NOₓ compounds are then reduced to nitrogen. WO2004111401 discloses such a device.

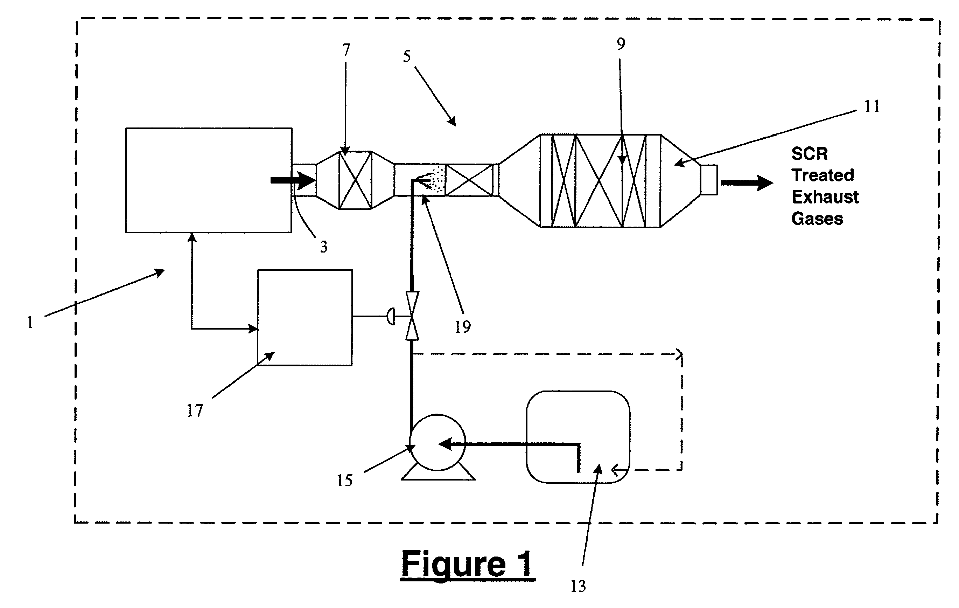

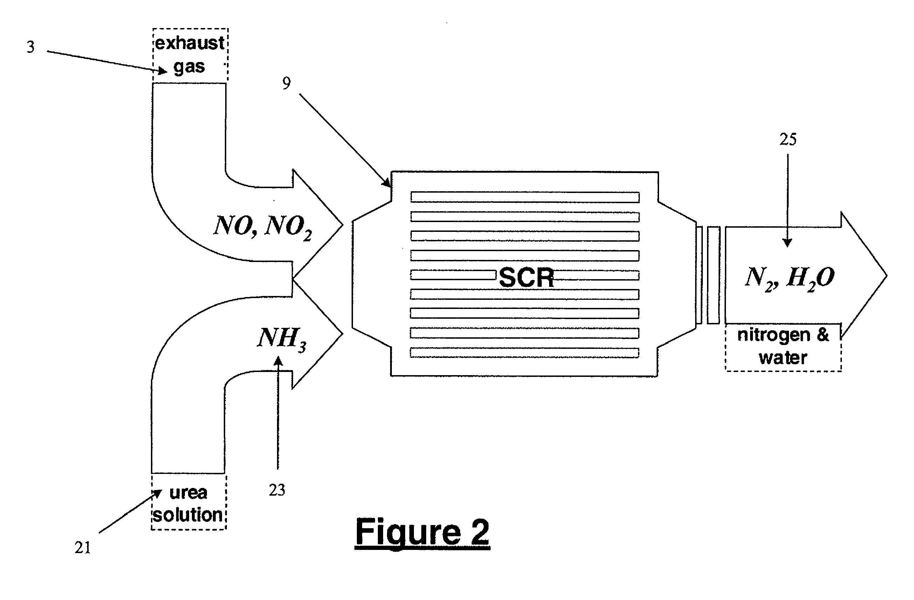

The general operation of an SCR device is shown in Figures 1 and 2.

In Figure 1, a diesel engine 1 produces an exhaust flow comprising various exhaust gases 3. The exhaust gases are conveyed through an exhaust system, indicated generally at 5, comprising an oxidation catalyst device 7, a selective reduction catalyst device 9 and a slip catalyst 11.

The oxidation catalyst device 7 is a flow through device that consists of a canister containing a honeycomb-like structure or substrate. The substrate has a large surface area that is coated with an active catalyst layer. This layer contains a small, well dispersed amount of precious metals such as platinum or palladium. As the exhaust gases traverse the catalyst, carbon monoxide, gaseous hydrocarbons and liquid hydrocarbon particles (unburned fuel and oil) are oxidized, thereby reducing harmful emissions.

The SCR device 9 performs Selective Catalytic Reduction (SCR) of nitrogen oxide (NOx) using ammonia (derived from a source of urea) as a chemical reductant. SCR is a proven technical and economic solution for the heavy-duty market to meet Euro IV and Euro V emission requirements for diesel-powered commercial vehicles in Europe.

The slip catalyst 11 is located downstream of the SCR device 9 to clean up any unreacted ammonia.

Urea for the SCR device 9 is stored in a tank 13 which is in fluid communication with the exhaust system 5. A pump 15 is provided to pump urea from the tank 13 to the exhaust system 5. The supply of urea is controlled by a control unit 17, for example the engine control unit, which receives engine speed and other engine parameters from the engine 1. An injection device 19 (also referred to herein as a fluid dosing device) is used to inject the urea into the exhaust flow.

The operation of the SCR device is shown in more detail in Figure 2. Exhaust gas 3, comprising for example NO and NO₂, mixes with urea solution 21 from the urea tank 13. When the urea solution 21 and the hot exhaust gas 3 mix hydrolysis and thermal decomposition processes produce ammonia 23, NH₃.

The ammonia 23 and exhaust gases 3 then enter the SCR device 9 which reduces the nitrogen oxides to nitrogen. Downstream of the SCR device 9 the exhaust flow comprises a mixture of nitrogen and water, as indicated at 25.

For maximum efficiency in the reduction reaction it is important that the reducing agent is dispersed evenly throughout the exhaust flow over a wide range of exhaust and reducing agent flow speeds and conditions. As shown in Figure 1, there is often another catalyst upstream of the urea injection point, which tends to smooth out the exhaust flow, causing low turbulences in the exhaust stream. In such a low turbulence environment there is a tendency for there to be incomplete mixing between the exhaust gases and the reducing agent.

DE10060808 describes a turbulence generating feature which comprises a rotating blade that acts to deviate the exhaust gas from its flow direction and create inhomogeneities in the exhaust gas stream. However, such a device tends to create a permanent back-pressure within the exhaust system which leads to a loss of engine efficiency.

DE19856366 shows a further arrangement in which the spray of reducing agent is perpendicular to the exhaust flow. In such arrangements, if the spray is optimised to fill the exhaust pipe at relatively low exhaust velocities then when the exhaust velocity is increased to higher levels the spray is deflected resulting in incomplete mixing.

It is therefore an object of the present invention to provide a fluid dosing device for introducing a fluid to a gas flow that substantially overcomes or mitigates the above mentioned problems.

### Summary of the Invention

By way of background, a fluid dosing device for introducing a fluid into a gas flow having a given flow direction may comprise: input means for receiving the fluid from a source of fluid; nozzle means for injecting the fluid into the gas flow, the nozzle means comprising valve means arranged to move between a first position in which the valve means seals the nozzle means and a second open position in which injection of fluid into the gas flow can take place wherein the fluid dosing device is arranged to inject fluid into the gas flow in a direction having at least a component which is counter to the flow direction of the gas flow.

Such an arrangement provides for a fluid dosing device that injects a fluid into a gas flow in such a manner that at least a component of the fluid injection direction is counter to the gas flow. Injecting the fluid counter to the gas flow allows far more efficient mixing of the fluid and the gases in the gas flow than in prior art arrangements.

Since the nozzle means is, at least partially, facing into the gas flow the possibility of contaminants or material deposits entering the fluid dosing device via the nozzle means is increased compared to prior art systems. In order to counteract this, the nozzle means is provided with a valve member which is arranged to move between a first (closed) position in which it seals the nozzle means from the gas flow and a second (open) position which allows injection into the gas flow to take place. It is noted that the opening and closing action of the valve means in use tends to clean the valve means and nozzle means of any material deposits that may have formed.

Conveniently, the nozzle means comprises a sealing surface that interacts with a complementary shaped valve surface on the valve means to seal the nozzle means in the first position to prevent fluid from exiting the fluid dosing device and to prevent gas from the gas flow entering the nozzle means.

Conveniently, the valve means is biased towards the first position by a suitable biasing means, such as a spring. Fluid pressure within the fluid dosing device may be arranged to provide a force opposing the biasing means such that when the fluid pressure exceeds a threshold valve the valve means is able to move to the second (open) position and fluid is therefore injected into the gas flow.

Preferably, the valve means and nozzle means can be shaped such that the injected fluid assumes the form of a hollow conical spray. Such a spray pattern is likely to mix better than the individual sprays described in the prior art.

A further means of preventing material deposits from forming on the nozzle of the fluid dosing device, with which the present invention is concerned, is to form a pocket of clean air around the nozzle means. The fluid dosing device may therefore conveniently be provided with an air supply means which injects (clean) air into the gas flow in the region of the nozzle means.

The air supply means constitutes an alternative solution to the problem of material deposits on the nozzle means (the provision of a valve member being the alternative solution).

Therefore, according to a first aspect of the present invention there is provided an exhaust pipe for a gas flow having a given flow direction, comprising a fluid dosing device for introducing a fluid into the gas flow, the dosing device comprising: input means for receiving the fluid from a source of fluid; nozzle means for injecting the fluid into the gas flow, and; air supply means arranged to inject air into the gas flow in the region of the nozzle means wherein the fluid dosing device is arranged to inject fluid into the gas flow in a direction which is substantially counter to the flow direction of the gas flow.

Conveniently, the fluid dosing device is received in a complementary shaped mounting. Preferably, the mounting arrangement is designed such that there is an air gap between the dosing device and the mounting. The air gap may conveniently be connected to a source of air and be open to the gas flow in the region of the nozzle means. The air gap and source of air together form an air supply means that, in use, supplies air from the air source through the air gap to the nozzle region of the dosing device in order to form an air pocket around the nozzle.

The fluid dosing device may be linear in shape and received in a complementary shaped mounting formed in a wall of the exhaust pipe.

For such a linear device, the nozzle means may preferably be closer to the wall of the exhaust pipe than the centre of the pipe.

The fluid dosing device may alternatively be substantially C shaped and arranged such that the nozzle of the device is substantially in the centre of the exhaust pipe.

The gas flow may comprise NOx-containing exhaust gases.

In one embodiment, the pipe comprises a mounting arrangement defining a bore for receiving the fluid dosing device, the fluid dosing device being of complementary shape to the mounting arrangement, the mounting arrangement being arranged such that the fluid dosing device injects fluid into the exhaust pipe in a direction which is substantially counter to the flow direction.

Conveniently, the exhaust pipe further comprises an air inlet formed in the wall of the exhaust pipe upstream of the fluid dosing device and connected to a source of air. The air inlet and source of air together form an air supply means arranged such that, in use, air may be injected from the source of air into the exhaust pipe such that a pocket of air is formed in the region of the nozzle means of the fluid dosing device.

Alternatively, instead of an air inlet located separate from the fluid dosing device, the air supply means may comprise a clearance (air gap) between the inner surface of the mounting arrangement and the outer surface of the fluid dosing device. The clearance may be open to the exhaust pipe in the region of the nozzle means and additionally may be connected to a source of air. A pocket of clean air may therefore be formed in the region of the nozzle means by injecting air from the air source through the clearance into the exhaust flow.

According to a second aspect of the present invention there is provided a catalytic reduction system comprising an exhaust pipe according to the first aspect of the present invention and at least one selective catalytic reduction converter, said converter being located in the exhaust pipe downstream of the fluid dosing device.

The catalytic reduction system may further comprise a reducing agent reservoir for holding a reducing agent (i.e. the "fluid" injected by the fluid dosing device) and a reducing agent pump for delivering reducing agent from the reservoir to the fluid dosing device.

The invention extends to a vehicle comprising an exhaust pipe according to the first aspect of the present invention and also to an engine management unit for use with a vehicle, the unit comprising an exhaust pipe according to the first aspect of the present invention.

### Brief Description of the Drawings

In order that the invention may be more readily understood, reference will now be made, by way of example, to the accompanying drawings in which:
Figure 1 is a schematic representation of a known exhaust system comprising a selective catalytic reduction (SCR) device;
Figure 2 is an enlarged view of the SCR device shown in Figure 1;
Figure 3 shows a known fluid dosing device for introducing a reducing agent into an exhaust flow;
Figure 4 shows the fluid dosing device of Figure 3 at an increased exhaust flow velocity;
Figure 5 shows a further fluid dosing device for introducing a reducing agent into an exhaust flow;
Figure 6 shows the fluid dosing device of Figure 5 at an increased exhaust flow velocity;
Figure 7 shows a fluid dosing device useful for understanding the present invention;
Figure 8 shows a valve member of the nozzle region of the fluid dosing device of Figure 7 in a first position;
Figure 9 shows the valve member of the nozzle region of the fluid dosing device of Figure 7 in a second position;
Figure 10 shows the fluid dosing device of Figure 7 at an increased exhaust flow velocity;
Figure 11 shows a further fluid dosing device useful for understanding the present invention;
Figure 12 shows the fluid dosing device of Figure 11 at an increased exhaust flow velocity;
Figure 13 shows an exhaust pipe including a fluid dosing device in accordance with an embodiment of the present invention and an additional air supply passage;
Figure 14 shows a further fluid dosing device incorporating an air supply means in accordance with an embodiment of the present invention; and
Figure 15 shows a C-shaped fluid dosing device incorporating an air supply means in accordance with an embodiment of the present invention.

### Detailed Description of the Embodiments

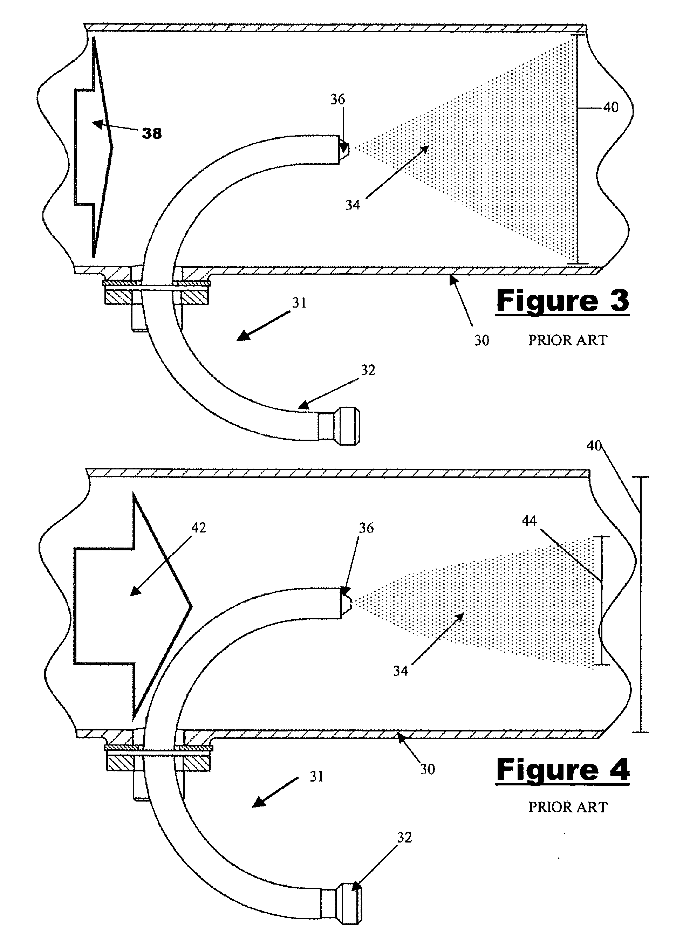

Figure 3 shows a known spray arrangement for introducing a reducing agent into an exhaust flow.

In Figure 3 a section through an exhaust pipe 30 is shown. A fluid dosing device, which shall be referred to with reference to the drawings as an injection device (generally indicated as 31), for injecting the reducing agent is provided. The injection device 31 comprises a nozzle body 32 which is shown passing through the lower wall of the pipe 30 and is of a generally C shaped construction. A spray 34 of reducing agent is shown entering the interior of the exhaust pipe 30 from a nozzle 36 of the injection device 31. The nozzle 36 is generally in the centre of the pipe 30.

The direction of the exhaust flow is indicated by the arrow 38. It is noted that the injection device 31 introduces the reducing agent in the same direction as the exhaust gas flow 38.

In Figure 3 the velocity of the exhaust flow is relatively low and it can be seen that the spray 34 is optimised to achieve full mixing of the spray with the exhaust gases, as indicated by the fact that the spray 34 extends across the diameter 40 of the pipe 32.

Figure 4 shows the same spray arrangement as Figure 3 and like numerals have been used to denote like features. In Figure 4, the direction of the exhaust flow is the same as in Figure 3. However, the velocity of the exhaust flow is greater than in Figure 3, as indicated by the larger arrow 42. This results in a problem since the diameter 44 of the spray 34 at the point that it evaporates is now less than the diameter 40 of the pipe 30. There is therefore incomplete mixing of the reducing agent within the increased velocity exhaust flow in the conventional spray arrangement of Figures 3 and 4. Further it is noted that in its gaseous form, the reducing agent now requires a long distance of exhaust pipe to fully mix with the exhaust gases. In restricted space environments, for example the underside of a car, it is often not possible to provide enough pipe length between catalysts to achieve full mixing.

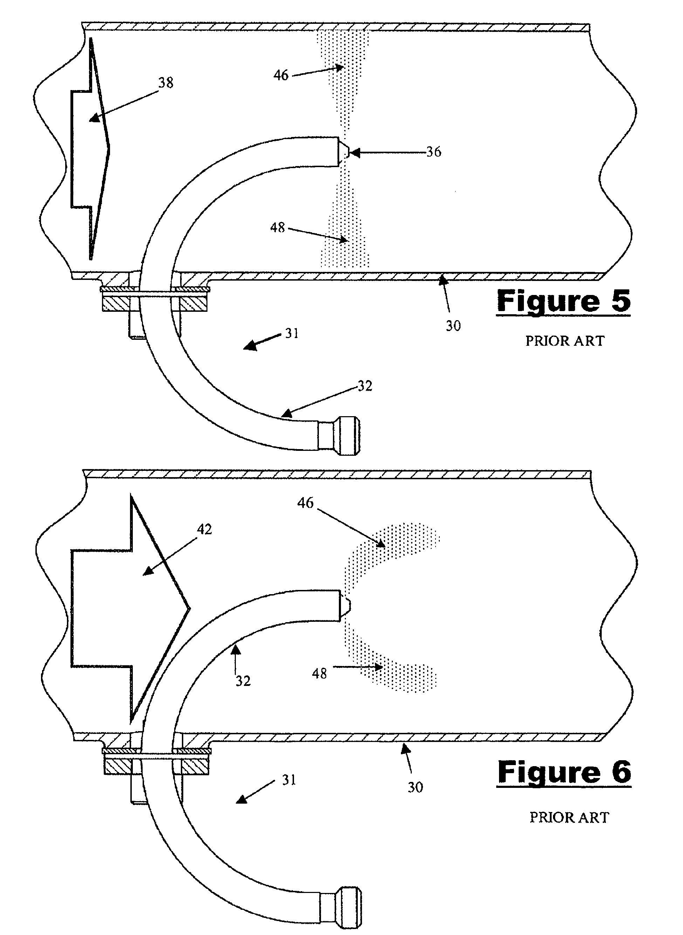

Figure 5 shows a further known arrangement for introducing a reducing agent into an exhaust flow. In Figure 5, a generally C shaped injection device 31 once again passes through the wall of the exhaust pipe 30 such that the nozzle 36 is generally in the centre of the pipe 30. The direction of the exhaust gas flow rate is once again indicated by arrow 38. The velocity of the exhaust gas flow is relatively low (as indicated by the size of the arrow 38).

In Figure 5 however the nozzle is arranged to introduce the reducing agent in two or more separate sprays 46, 48. The reducing agent in this case is introduced perpendicular to the direction of the exhaust gas flow. Such an arrangement is shown in DE10060808.

It can be seen in Figure 5 that the injection device 31 is optimised to introduce the reducing agent at this low flow velocity since the sprays 46, 48 extend to the walls of the pipe 30.

Figure 6 shows the same arrangement as Figure 5. In Figure 6 however the velocity of the exhaust gas flow has increased as indicated by the larger arrow 42. The reducing agent sprays 46, 48 are deflected in this higher velocity exhaust gas flow such that there is no longer complete mixing of the spray with the exhaust gases before the spray evaporates.

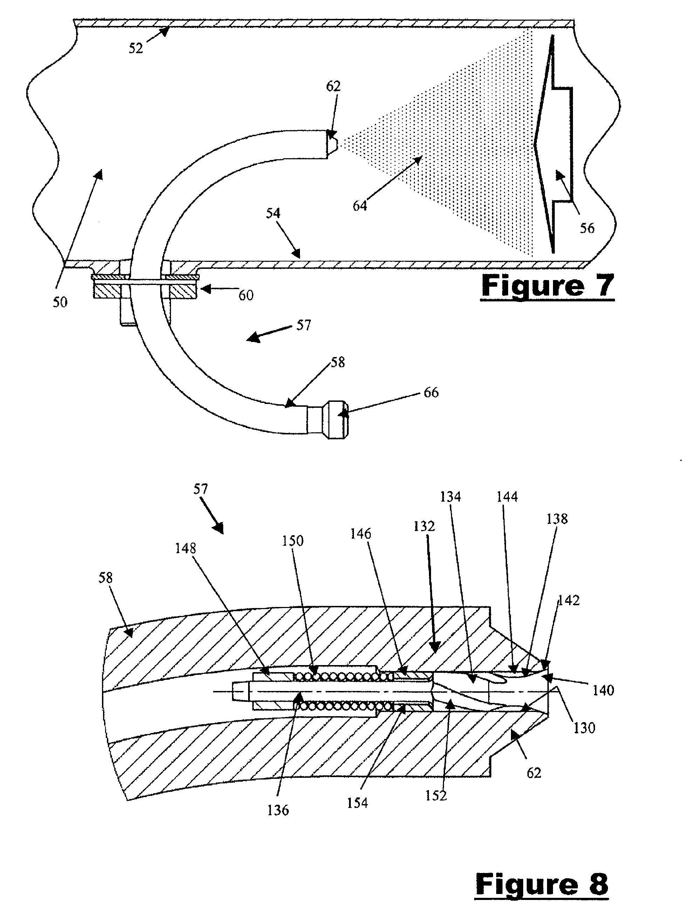

Figure 7 shows an arrangement for introducing a reducing agent into an exhaust flow which is not in accordance with the present invention, but which is included to aid understanding. Figure 7 shows a section through an exhaust pipe 50. Upper 52 and lower 54 pipe walls are visible.

Exhaust gases flow through the pipe 50 in a generally right to left direction as indicated by the arrow 56.

An injection device 57, comprising a nozzle body 58, is shown entering the pipe 50 through the lower pipe wall 54. A sealing arrangement 60 clamps the injection device 58 in place and ensures that no exhaust gases can escape at the point where the device 58 enters the pipe 50.

The injection device 58 comprises a nozzle 62 which injects reducing agent 64 into the centre of the pipe 50 in a direction that opposes the direction 56 of exhaust gas flow within the pipe 50. The injection device 58 is substantially C shaped. End 66 of the injection device is in fluid communication with a source (not shown) of reducing agent, e.g. the urea tank 13 of Figure 1. A bore (not shown in Figure 7) runs through the nozzle body 58 such that a fluid communication path exists between the fluid source/end 66 and the nozzle 62.

The spray 64 introduced into the pipe 50 by the injection arrangement (58, 62) is optimised to substantially reach the full cross section of the exhaust pipe 50.

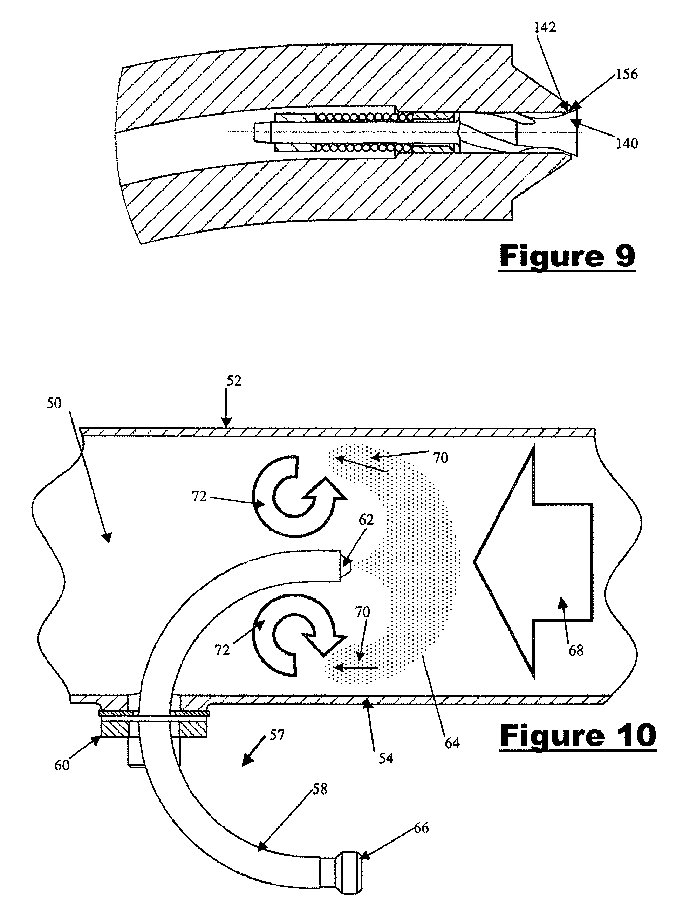

The nozzle 62 of the injection device shown in Figure 7 comprises a valve arrangement. For ease of reference and the clarity of the drawings the valve arrangement is not shown in Figure 7 but is depicted in Figures 8 and 9.

Turning to Figure 8, a cross section through the injection device 57 is shown in the region of the nozzle 62. The nozzle body 58/nozzle 62 comprises a nozzle bore 130 within which a nozzle valve element (indicated generally as 132) is located.

The nozzle valve element 132 comprises a piston 134 located towards the end of the nozzle bore 130 and a shaft 136 located on the other side of the piston 134 than the tip of the nozzle 62. The piston 134 is generally a close clearance fit in the nozzle bore 130 such that the nozzle valve element 132 may slide within the nozzle bore. An annular groove 138 is provided in a downstream portion of the piston 134 and the nozzle bore 130. An end of the piston 134 adjacent the tip of the nozzle 62 is flared outwards to define a valve surface 140 of the piston having a diameter greater than the nozzle bore 130. The nozzle bore 130 adjacent the tip of the nozzle is flared to define a sealing surface 142 complementary to the shape of the valve surface 140 of the piston. A nozzle chamber 144 is defined by the annular groove 138 and the bore 130 of the nozzle.

The end of the piston 134 distant from the tip of the nozzle is attached to the shaft 136 of the valve nozzle element 132. A bush 146 is provided within the nozzle bore 130, and the shaft 136 is a clearance fit within the bush 146. The shaft extends into the bore of the injection device. A retaining collar 148 is carried on and fixed to the shaft 136 close to the end of the shaft distant from the piston. A nozzle spring 150, comprising a compression spring, is disposed between the retaining collar 148 and the bush 148 so as to bias the valve surface 140 of the piston against the sealing surface 142 of the nozzle.

Helical grooves 152 are provided on an upstream portion of the piston to define helical passages between the piston 134 and the nozzle bore 130. The source of reducing agent is therefore in communication with the tip of the nozzle by way of the helical passages 152 and a clearance 154 between the shaft 136 and the bush 146.

Referring to Figures 8 and 9, as reducing agent is pumped from the source of reducing agent through the bore 130 of the injection device 57, an increase in pressure of the reducing agent is experienced in the nozzle chamber 144 of the nozzle 62. The pressure of the reducing agent within the nozzle chamber 144 acts upon the valve surface 140 of the piston so as to impart a force on the valve nozzle element 132 opposed to the biasing force of the nozzle spring 150. When the pressure of reagent exceeds a threshold value, the force acting on the valve nozzle element 132 due to the reducing agent pressure is sufficient to overcome the biasing force of the nozzle spring 150 and to create a clearance 156 between the valve surface 140 of the piston and the sealing surface 142 of the nozzle (Figure 9).

When the valve nozzle element is in an open position (the position described above in relation to Figure 9), reducing agent is expelled from the nozzle 62 by way of the clearance 156. The size of the clearance and the shape of the sealing surface 142 and valve surface 140 are adapted so that, upon expulsion of the reducing agent, the reducing agent forms a hollow conical spray to aid dispersion and mixing of the reducing agent within the exhaust gas stream.

The nozzle valve element 132 described above has the advantage that no reducing agent is exposed to the exhaust gases when the nozzle is not injecting. This reduces the chance of the reducing agent decomposing and blocking the nozzle 62 (or any exhaust contaminants blocking it). It is noted that the movement of the nozzle as it opens tends to be self-cleaning. The hollow conical spray produced is also likely to mix better than the individual sprays in the prior art.

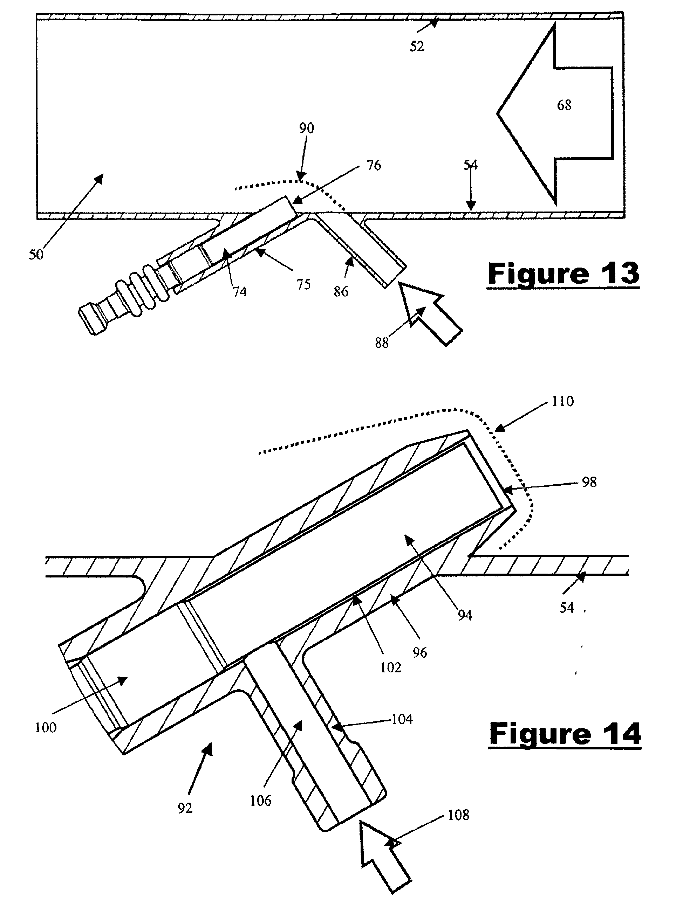

It is noted that the nozzle valve element 132 described in relation to Figures 8 and 9 is located in the nozzle 62 of each of the arrangements shown in Figures 7 and 10 to12. It may also additionally be located in the arrangements depicted Figures 13 to 15 relating to the present invention.

Figure 10 shows the same injection arrangement (58, 62) of Figure 7. In this Figure however the exhaust gas flow has a greater velocity than in Figure 7. This greater velocity flow is indicated by arrow 68. It is noted that the direction of the exhaust flow remains from right to left in the Figure.

In the higher velocity flow of Figure 10 the spray 64 of reducing agent that is introduced from the nozzle 62 of the injection device 57 is deflected backwards (relative to its injection direction) such that the direction of the spray 64 begins to approximate the direction of the exhaust flow (the changed direction of the spray 64 being indicated by the arrows 70).

It is noted however that, as the distance the spray 64 travels before reaching the walls 52, 54 of the pipe 50 is not substantially altered, the spray 64 still substantially fills the full pipe cross section.

There is a high differential velocity between the spray 64 and the exhaust gas flow 68 at the centre of the pipe in the arrangement of Figure 10. Close to the pipe walls however there is a low differential velocity between the spray 64 and the exhaust gas flow 68. This varying velocity differential across the pipe 50 results in the formation of vortices 72 downstream from the nozzle 62 of the injection device 57. These vortices 72 act to provide further mixing of the reducing agent 64 with the exhaust gases. It is noted that since these vortices are only generated while the injection device is spraying reducing agent much less energy is required to create them than is the case if the turbulence is generated by deflecting the exhaust gases directly (by for example using an arrangement similar to that shown in DE10060808).

To achieve the most even mixing it is advantageous to inject reducing agent into the centre of the exhaust pipe as shown in Figures 7 and 10. However, this may be undesirable for reasons of heat management and it is noted that heating of the nozzle of the injection device by the exhaust gases can result in the urea solution exceeding the temperature (around 70°C) at which crystals precipitate out of it.

To reduce heating of the nozzle and injection device it is known to inject reducing agent from close to the wall of the pipe. An example of this arrangement is shown in DE 19856366.

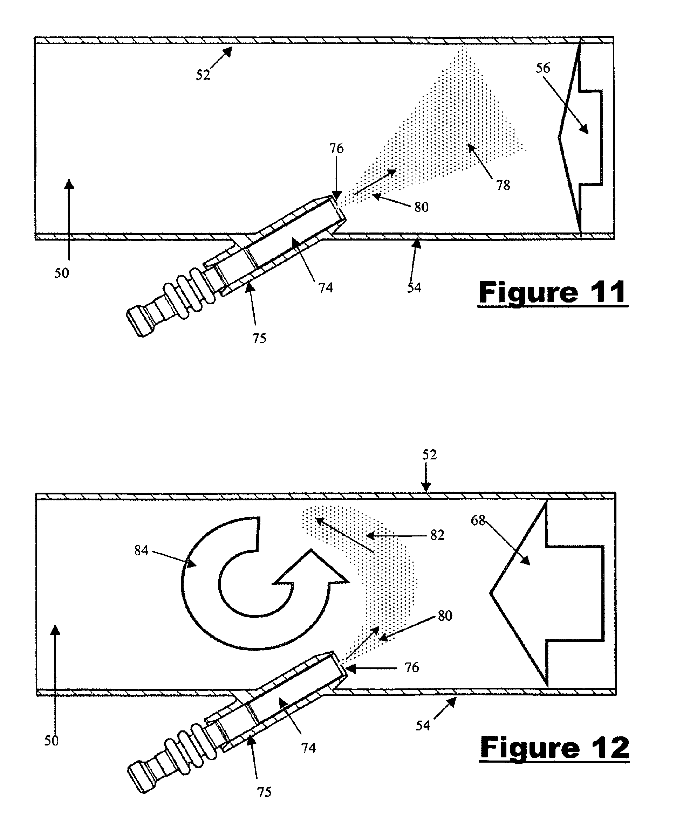

An arrangement in which reducing agent is introduced from close to one of the walls of the exhaust pipe is shown in Figures 11 and 12.

In Figure 11 and 12, reducing agent is introduced into the pipe 50 from a linearly shaped injection device 74. The nozzle 76 of this device 74 is shown to be closer to the lower wall 54 of the pipe 50 than the centre of the pipe. The axis of the injection device 74 is orientated such that the spray 78 of reducing agent from the nozzle 76 has an injection direction 80 with a substantial component that opposes the direction 56 of the exhaust gas flow. The angle between the injection device and the axis of the pipe may generally be in the range 15-45 degrees to ensure good mixing of the reducing agent with the exhaust gases.

The nozzle 74 is mounted and received in a complementary shaped port 75 formed by the lower wall 54 of the pipe 50.

Figure 11 shows a pipe 50 in which the exhaust gases have a relatively low velocity. It can be seen from this Figure that the injection arrangement (74, 76) is optimised to produce a spray 78 that substantially fills the entire cross section of the pipe.

Figure 12 shows the same arrangement as in Figure 11 except that the velocity of the exhaust gas flow is relatively higher (as indicated by the larger arrow 68).

The initial injection direction 80 is the same as in Figure 11 but the increased exhaust gas flow velocity causes the spray 78 to curl backwards until the spray direction changes (as indicated by arrow 82) such that it has a component that is travelling in the same direction as the exhaust gas flow.

It is noted however that the fact that the initial injection occurs substantially against the flow of exhaust gas means that the spray 78 still substantially fills the cross section of the pipe 50. The relatively high velocity differential between the spray 78 and the exhaust gases at the bottom of the pipe 50 (as shown in the orientation illustrated in Figures 11 and 12) and the relatively low differential velocity between the spray and exhaust gases at the top of the pipe (as shown in the orientation shown in Figures 11 and 12) generates a vortex 84 which further aids mixing of the spray and the exhaust gas.

As noted above, the exhaust flow from an engine may contain contaminants. Furthermore, it is possible for material to deposit out of the reducing agent once it has been injected into the exhaust pipe. Such contaminants and materials may deposit onto the nozzle of an injection device thereby having an adverse affect on the ability of the injection device to form a spray of reducing agent. Such a problem is particularly relevant in the case of the present invention where reducing agent is injected counter to the exhaust flow direction.

Figures 13 to 15 show various injection device arrangements designed to reduce the chance of material depositing onto the nozzle of the injection device in accordance with the present invention. It is noted that the arrangements shown in Figures 13-15 may also include the valve arrangement described above in relation to Figures 8 and 9.

Figure 13 shows a first arrangement which is generally similar to that depicted in Figure 12 (it is noted that like numerals have been used to denote like features between Figures 12 and 13). In Figure 13 however the lower pipe wall 54 defines a further injection means 86 located upstream from the injection device 74.

Injection means 86 (air inlet 86) is arranged to introduce a flow of air 88 into the exhaust pipe 50 in substantially the direction of the exhaust flow 68. This air flow 88 forms a pocket 90 of clean air around the nozzle 76 of the injection device 74 thereby reducing the risk of material deposits forming on the nozzle 76 opening.

Figure 14 shows an alternative design for the injection device 74 shown in Figure 13. Figure 14 therefore shows an injection arrangement 92 in which an injection device 94 is mounted and received in a substantially complementary shaped port 96 formed by the lower wall 54 of the pipe 50. The injection device comprises a nozzle 98 within the pipe 50 and serves to convey reducing agent from a source of reducing agent (not shown) to the pipe 50 (the direction of reducing agent being generally indicated by the arrow 100).

An annular clearance 102 surrounds the injection device 94 as defined by the outer surface of the injection device 94 and the inner surface of the socket 96.

The port 96 further comprises an air inlet 104 having an air supply bore 106 that connects the annular clearance 102 to a source of air (indicated by the air flow arrow 108).

The air inlet 104, clearance 102 and source of air together form an air supply means that, in use allows air to flow through the air supply passage 106 and the annular passage 102 to the nozzle opening 98. This flow of air once again forms a pocket 110 of relatively clean air around the injection device 94 and the nozzle 98 thereby reducing the risk that deposits will form on the nozzle 98 and impair injection performance.

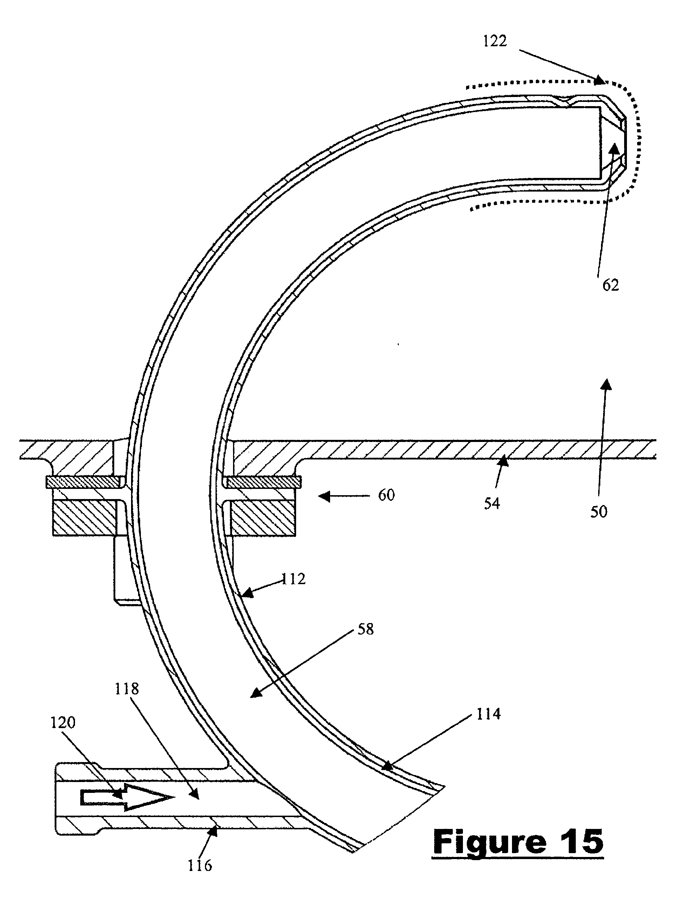

Figure 15 shows a variation of the injection device arrangement of Figures 5 and 6 (it is noted that like numerals have been used to denote like features between Figures 5, 6 and 15).

In Figure 15, the injection device 58 is surrounded by a sleeve 112. The sleeve is clamped in position by the sealing arrangement 60. The sleeve 112 is designed such that a gap 114 is defined between the inner surface of the sleeve 112 and the outer surface of the injection device 58.

An air inlet 116, comprising an air supply bore 118, is defined by the sleeve member 112 which serves to connect the gap 114 to a source of air (not shown in Figure 15).

The source of air and gap 114 together form an air supply means and, in use, a flow of air 120 is passed through the air supply bore 118 and gap 114 to the region of the nozzle 62 of the injection device 58. In this manner a pocket 122 of relatively clean air is formed around the nozzle region of the injection device 58.

It is noted that as a relatively low pressure of air is needed to form the air pockets of Figures 13-15, it may conveniently be bled from anywhere in the inlet passages of the engine downstream of the turbocharger's compressor wheel.

It is also noted in the embodiments of Figures 13-15 that the air serves to reduce the temperature of the nozzle (76, 98, 62) which further minimises the tendency for crystals to from in the reducing agent solution within the nozzle.

The embodiments of the present invention described above are illustrated injecting into straight, parallel sided sections of the exhaust. However, it will be appreciated by the skilled person that the same principles can be applied for injection into a bend of the exhaust pipe and/or into a pipe of varying cross section. If required, the pipe cross-section can be deliberately varied near the point of injection of the reducing agent in order to optimise the exhaust velocity to achieve the best spray missing. For instance, the spray could be introduced into the throat region of a venturi in order to inject into a high velocity exhaust flow without generating excessive back pressure.

It will be understood that the embodiments described above are given by way of example only and are not intended to limit the invention, the scope of which is defined in the appended claims. It will also be understood that the embodiments described may be used individually or in combination.

## Claims

1. An exhaust pipe (50) for a gas flow having a given flow direction, comprising a fluid dosing device (58, 74, 94) for introducing a fluid into the gas flow, the dosing device comprising:
input means for receiving the fluid from a source of fluid;
nozzle means (62, 76, 98) for injecting the fluid into the gas flow, and;
air supply means (86, 102, 104, 106, 114, 116, 118) arranged to inject air (88, 120) into the gas flow in the region of the nozzle means (62, 76, 98);
wherein the fluid dosing device (58, 74, 94) is arranged to inject fluid into the gas flow in a direction which is substantially counter to the flow direction of the gas flow.

2. An exhaust pipe as claimed in Claim 1, the pipe comprising a mounting arrangement (75, 96) defining a bore for receiving the fluid dosing device (74, 94), the fluid dosing device (57) being of complementary shape to the mounting arrangement (75, 96), the mounting arrangement (75, 96) being arranged such that the fluid dosing device (74, 94) injects fluid into the exhaust pipe (50) in a direction which is substantially counter to the flow direction.

3. An exhaust pipe as claimed in Claim 2, wherein the air supply means comprises an air inlet means (86) formed in a wall (54) of the exhaust pipe (50) and being located upstream of the nozzle means (76) of the fluid dosing device (57) and a source of air, the air inlet means (86) being arranged to inject air from the source of air into the exhaust pipe (50) such that a pocket of air is formed in the region of the nozzle means (62) of the fluid dosing device (74).

4. An exhaust pipe as claimed in Claim 2, wherein the air supply means comprises a clearance (102, 114) defined between an outer surface of the fluid dosing device (58, 94) and an inner surface of the bore of the mounting arrangement (75, 96) and a source of air, wherein the clearance is arranged to be open to the exhaust pipe (50) in the region of the nozzle means (62, 98) and in communication with the source of air and the air supply means is arranged such that air from the source of air is injected into the exhaust pipe (50) to form a pocket of air in the region of the nozzle means (62, 98) of the fluid dosing device (58, 94).

5. An exhaust pipe as claimed in any of Claims 2 to 4, wherein the fluid dosing device (74, 94) is linearly shaped.

6. An exhaust pipe as claimed in Claim 5, wherein the nozzle means (76, 98) is closer to the wall (54) of the exhaust pipe (50) than the centre of the exhaust pipe (50).

7. An exhaust pipe as claimed in any of Claims 1 to 4, wherein the fluid dosing device (58) is substantially C-shaped, the nozzle means (62) being arranged to be substantially at the centre of the exhaust pipe (50).

8. An exhaust pipe as claimed in any preceding claim, wherein the gas flow comprises NOx-containing exhaust gases.

9. A catalytic reduction system comprising
an exhaust pipe (50) as claimed in any preceding claim, and;
at least one selective catalytic reduction converter (9), said converter being located in the exhaust pipe (50) downstream of the fluid dosing device (58, 74, 94).

10. A catalytic reduction system as claimed in Claim 9, further comprising
a reducing-agent reservoir for holding a reducing agent, and;
a reducing-agent pump for delivering reducing agent from the reservoir to the fluid dosing device (58, 74, 94).

11. A vehicle comprising a catalytic reduction system as claimed in Claim 9 or 10.

## Patentansprüche

1. Abgasrohr (50) für einen Gasstrom mit einer bestimmten Strömungsrichtung, umfassend eine Fluiddosiervorrichtung (58, 74, 94) zum Einführen eines Fluids in den Gasstrom, wobei die Dosiervorrichtung Folgendes umfasst:
eine Eingabeeinrichtung zum Erhalten des Fluids aus einer Fluidquelle:
eine Düseneinrichtung (62, 76, 98) zum Einspritzen des Fluids in den Gasstrom und
eine Luftzufuhreinrichtung (86, 102, 104, 106, 114, 116, 118), die zum Einblasen von Luft (88, 120) in der Region der Düseneinrichtung (62, 76, 98) in den Gasstrom angeordnet ist,
wobei die Fluiddosiervorrichtung (58, 74, 94) zum Einspritzen von Fluid in den Gasstrom in einer Richtung angeordnet ist, die der Strömungsrichtung des Gasstroms im Wesentlichen entgegengesetzt ist.

2. Abgasrohr nach Anspruch 1, wobei das Rohr eine Befestigungsanordnung (75, 96) aufweist, die eine Bohrung zum Aufnehmen der Fluiddosiervorrichtung (74, 94) definiert, wobei die Fluiddosiervorrichtung (57) eine der Befestigungsanordnung (75, 96) komplementäre Form hat, wobei die Befestigungsanordnung (75, 96) so angeordnet ist, dass die Fluiddosiervorrichtung (74, 94) Fluid in einer Richtung in das Abgasrohr (50) einspritzt, die der Strömungsrichtung im Wesentlichen entgegengesetzt ist.

3. Abgasrohr nach Anspruch 2, bei dem die Luftzufuhreinrichtung eine Lufteinlasseinrichtung (86), die in einer Wand (54) des Abgasrohrs (50) ausgebildet ist und sich zuströmseitig der Düseneinrichtung (76) der Fluiddosiervorrichtung (57) befindet, und eine Luftquelle umfasst, wobei die Lufteinlasseinrichtung (86) so angeordnet ist, dass sie Luft aus der Luftquelle in das Abgasrohr (50) einbläst, so dass in der Region der Düseneinrichtung (62) der Fluiddosiervorrichtung (74) ein Lufteinschluss gebildet wird.

4. Abgasrohr nach Anspruch 2, bei dem die Luftzufuhreinrichtung einen Freiraum (102, 114), der zwischen einer Außenfläche der Fluiddosiervorrichtung (58, 94) und einer Innenfläche der Bohrung der Befestigungsanordnung (75, 96) definiert ist, und eine Luftquelle umfasst, wobei der Freiraum so angeordnet ist, dass er in der Region der Düseneinrichtung (62, 98) zu dem Abgasrohr (50) offen ist und mit der Luftquelle kommuniziert, und die Luftzufuhreinrichtung so angeordnet ist, dass Luft aus der Luftquelle in das Abgasrohr (50) eingeblasen wird, um in der Region der Düseneinrichtung (62, 98) der Fluiddosiervorrichtung (58, 94) einen Lufteinschluss zu bilden.

5. Abgasrohr nach einem der Ansprüche 2 bis 4, bei dem die Fluiddosiervorrichtung (74, 94) linear gestaltet ist.

6. Abgasrohr nach Anspruch 5, bei der sich die Düseneinrichtung (76, 98) näher an der Wand (54) des Abgasrohres (50) als der Mitte des Abgasrohres (50) befindet.

7. Abgasrohr nach einem der Ansprüche 1 bis 4, bei dem die Fluiddosiervorrichtung (58) im Wesentlichen C-förmig ist, wobei die Düseneinrichtung (62) so angeordnet ist, dass sie sich im Wesentlichen in der Mitte des Abgasrohres (50) befindet.

8. Abgasrohr nach einem der vorhergehenden Ansprüche, bei dem der Gasstrom NOx-haltige Abgase umfasst.

9. Katalytisches Reduktionssystem, umfassend
ein Abgasrohr (50) nach einem der vorhergehenden Ansprüche und
wenigstens einen SCR-Katalysator (9) für die selektive katalytische Reduktion, wobei sich der genannte Katalysator abströmseitig der Fluiddosiervorrichtung (58, 74, 94) in dem Abgasrohr (50) befindet.

10. Katalytisches Reduktionssystem nach Anspruch 9, ferner umfassend:
einen Reduktionsmittelvorratsbehälter zum Aufnehmen eines Reduktionsmittels und
eine Reduktionsmittelpumpe zum Fördern von Reduktionsmittel aus dem Vorratsbehälter zu der Fluiddosiervorrichtung (58, 74, 94).

11. Fahrzeug, das ein katalytisches Reduktionssystem nach Anspruch 9 oder 10 aufweist.

## Revendications

1. Tube d'échappement (50) pour un flux de gaz ayant une direction d'écoulement donnée, comprenant un dispositif de dosage de fluide (58, 74, 94) pour introduire un fluide dans le flux de gaz, le dispositif de dosage comprenant :
des moyens d'entrée pour recevoir le fluide depuis une source de fluide ;
des moyens formant buse (62, 76, 98) pour injecter le fluide dans le flux de gaz, et
des moyens d'alimentation d'air (86, 102, 104, 106, 114, 116, 118) agencés pour injecter de l'air (88, 120) dans le flux de gaz dans la région des moyens formant buse (62, 76, 98) ;
dans lequel le dispositif de dosage de fluide (58, 74, 94) est agencé pour injecter le fluide dans le flux de gaz dans une direction qui est sensiblement contraire à la direction d'écoulement du flux de gaz.

2. Tube d'échappement selon la revendication 1, le tube comprenant un agencement de montage (75, 96) définissant un perçage pour recevoir le dispositif de dosage de fluide (74, 94), le dispositif de dosage de fluide (57) ayant une forme complémentaire à l'agencement de montage (75, 96), l'agencement de montage (75, 96) étant agencé de telle façon que le dispositif de dosage de fluide (74, 94) injecte du fluide dans le tube d'échappement (50) dans une direction qui est sensiblement contraire à la direction d'écoulement.

3. Tube d'échappement selon la revendication 2, dans lequel les moyens d'alimentation d'air comprennent une entrée d'air (86) formée dans une paroi (54) du tube d'échappement (50) et située en amont des moyens formant buse (76) du dispositif de dosage de fluide (57) et une source d'air, l'entrée d'air (86) étant agencée pour injecter de l'air depuis la source d'air jusque dans le tube d'échappement (50) de telle façon qu'une poche d'air se forme dans la région des moyens formant buse (62) du dispositif de dosage de fluide (74).

4. Tube d'échappement selon la revendication 2, dans lequel les moyens d'alimentation d'air comprennent un jeu (102, 114) défini entre une surface extérieure du dispositif de dosage de fluide (58, 94) et une surface intérieure du perçage de l'agencement de montage (75, 96) et une source d'air, dans lequel le jeu est agencé pour s'ouvrir vers le tube d'échappement (50) dans la région des moyens formant buse (62, 98) et en communication avec la source d'air, et les moyens d'alimentation d'air sont agencés de telle façon que l'air provenant de la source d'air est injecté dans le tube d'échappement (50) pour former une poche d'air dans la région des moyens formant buse (62, 98) du dispositif de dosage de fluide (58, 94).

5. Tube d'échappement selon l'une quelconque des revendications 2 à 4, dans lequel le dispositif de dosage de fluide (74, 94) est de forme linéaire.

6. Tube d'échappement selon la revendication 5, dans lequel les moyens formant buse (76, 98) sont plus proches de la paroi (54) du tube d'échappement (50) que du centre du tube d'échappement (50).

7. Tube d'échappement selon l'une quelconque des revendications 1 à 4, dans lequel le dispositif de dosage de fluide (58) est sensiblement en forme de C, les moyens formant buse (62) étant agencés pour être sensiblement au centre du tube d'échappement (50).

8. Tube d'échappement selon l'une quelconque des revendications précédentes, dans lequel le flux de gaz comprend des gaz d'échappement contenant des NOx.

9. Système de réduction catalytique comprenant
un tube d'échappement (50) selon l'une quelconque des revendications précédentes, et
au moins un convertisseur de réduction catalytique sélectif (9), ledit convertisseur étant situé dans le tube d'échappement (50) en aval du dispositif de dosage de fluide (58, 74, 94).

10. Système de réduction catalytique selon la revendication 9, comprenant en outre
un réservoir d'agent réducteur pour contenir un agent réducteur, et
une pompe d'agent réducteur pour fournir l'agent réducteur depuis le réservoir vers le dispositif de dosage de fluide (58, 74, 94).

11. Véhicule comprenant un système de réduction catalytique selon la revendication 9 ou 10.
